(19) Europäisches Patentamt / European Patent Office / Office européen des brevets

(11) **EP 4 358 169 A2**

(12) **EUROPEAN PATENT APPLICATION**

(43) Date of publication:
**24.04.2024 Bulletin 2024/17**

(21) Application number: **23202875.3**

(22) Date of filing: **11.10.2023**

(51) International Patent Classification (IPC):
$H01M\ 4/04$ (2006.01)    $H01M\ 4/134$ (2010.01)
$H01M\ 4/136$ (2010.01)    $H01M\ 4/1395$ (2010.01)
$H01M\ 4/1397$ (2010.01)    $H01M\ 4/38$ (2006.01)
$H01M\ 4/40$ (2006.01)    $H01M\ 4/58$ (2010.01)
$H01M\ 10/0525$ (2010.01)    $H01M\ 10/0562$ (2010.01)

(52) Cooperative Patent Classification (CPC):
H01M 10/0562; H01M 4/0404; H01M 4/0423;
H01M 4/0426; H01M 4/0433; H01M 4/0461;
H01M 4/134; H01M 4/136; H01M 4/1395;
H01M 4/1397; H01M 4/382; H01M 4/405;
H01M 4/5805; H01M 10/0525; H01M 2220/20;

(Cont.)

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(30) Priority: **20.10.2022 JP 2022168534**
                   **13.03.2023 JP 2023038836**

(71) Applicant: **TOYOTA JIDOSHA KABUSHIKI
KAISHA**
**Toyota-shi, Aichi-ken, 471-8571 (JP)**

(72) Inventors:
• **LI, Ximeng**
  **Toyota-shi, 471-8571 (JP)**
• **YAMASAKI, Hisatsugu**
  **Toyota-shi, 471-8571 (JP)**
• **KON, Makio**
  **Toyota-shi, 471-8571 (JP)**
• **MATSUNAGA, Tomoya**
  **Toyota-shi, 471-8571 (JP)**

(74) Representative: **D Young & Co LLP
3 Noble Street
London EC2V 7BQ (GB)**

(54) **SECONDARY BATTERY AND MANUFACTURING METHOD FOR THE SAME**

(57)     Disclosed is a secondary battery comprising a metallic lithium negative electrode and having excellent coulombic efficiency. The secondary battery of the present disclosure comprises a positive electrode active material layer, a solid electrolyte layer, and a negative electrode active material layer, wherein the negative electrode active material layer comprises a first substance and a second substance, wherein the first substance is at least one of an alloy of Li and an element X and a compound of Li and the element X; the second substance is at least one of a simple substance of a metal element M, an alloy of Li and the metal element M, and a compound of Li and the metal element M; and a formation energy $E_{LiX}$ of the first substance is lower than a formation energy $E_{MX}$ of the compound of the metal element M and the element X.

FIG. 3

EP 4 358 169 A2

**(Cont. next page)**

(52) Cooperative Patent Classification (CPC): (Cont.)
H01M 2300/0068

**Description**

TECHNICAL FIELD

The present application discloses a secondary battery and a manufacturing method therefor.

BACKGROUND ART

PTL 1 discloses an all-solid battery comprising a positive electrode, a solid electrolyte layer, a negative electrode current collector, and a Li-Mg alloy deposited between the solid electrolyte layer and the negative electrode current collector by charging. PTL 2 discloses a negative electrode material used in a metal secondary battery, containing $MgH_2$ and a metal catalyst that is in contact with the $MgH_2$ and improves reversibility of a conversion reaction. PTL 3 discloses an all-solid lithium secondary battery comprising a positive electrode, a solid electrolyte layer, a negative electrode, and a predetermined metal layer formed between the solid electrolyte layer and the negative electrode. PTL 4 discloses a negative electrode for all-solid secondary batteries, comprising a negative electrode current collector and a coating layer that covers the negative electrode current collector and allows deposition of metallic lithium via a lithium alloy layer during charging.

CITATION LIST

PATENT LITERATURE

PTL 1 Japanese Unexamined Patent Publication No. 2020-184513
PTL 2 Japanese Unexamined Patent Publication No. 2012-038697
PTL 3 WO 2013/131241
PTL 4 Japanese Unexamined Patent Publication No. 2018-129159

SUMMARY

TECHNICAL PROBLEM

Secondary batteries comprising a metallic lithium negative electrode have room for improvement in terms of coulombic efficiency.

SOLUTION TO PROBLEM

The present application discloses the following plurality of aspects as a means for achieving the above object.

<Aspect 1>

A secondary battery, comprising a positive electrode active material layer, a solid electrolyte layer, and a negative electrode active material layer, wherein

the negative electrode active material layer comprises a first substance and a second substance, wherein
the first substance is at least one of an alloy of Li and an element X and a compound of Li and the element X;
the second substance is at least one of a simple substance of a metal element M, an alloy of Li and the metal element M, and a compound of Li and the metal element M; and a formation energy $E_{LiX}$ of the first substance is lower than a formation energy $E_{MX}$ of a compound of the metal element M and the element X.

<Aspect 2>

The secondary battery according to Aspect 1, wherein

the negative electrode active material layer comprises the first substance formed into a film, wherein
the first substance formed into the film has a thickness of 10 nm or more and 50 $\mu$m or less.

<Aspect 3>

A secondary battery, comprising a positive electrode active material layer, a solid electrolyte layer, a negative electrode current collector, and metallic lithium deposited between the solid electrolyte layer and the negative electrode current collector by charging, wherein

a compound of a metal element M and an element X is present between the solid electrolyte layer and the negative electrode current collector; and
a formation energy $E_{MX}$ of the compound of the metal element M and the element X is higher than a formation energy $E_{LiX}$ of a compound of Li and the element X.

<Aspect 4>

The secondary battery according to Aspect 3, which is configured so that the compound of the metal element M and the element X decomposes during charging to generate a compound of Li and the element X on a surface of the negative electrode current collector.

<Aspect 5>

The secondary battery according to any of Aspects 1 to 4, wherein the metal element M and the element X satisfy the following relations (1) and (2):

(1) a formation energy $E_{MX}$ of a compound of the metal element M and the element X is lower than a formation energy $E_{LiM}$ of a compound of Li and the metal element M; and
(2) a formation energy $E_{LiX}$ of a compound of Li and the element X is lower than a formation energy $E_{MX}$ of the compound of the metal element M and the element X.

<Aspect 6>

The secondary battery according to any of Aspects 1 to 5, wherein the metal element M is Mg.

<Aspect 7>

The secondary battery according to Aspect 6, wherein the element X is at least one of Bi, Sb, In, Sn, H, I, Ga, Te, Hg, Cd, Si, B, As, Zn, Ge, Br, P, and Se.

<Aspect 8>

The secondary battery according to any of Aspects 1 to 7, wherein the element X is at least one of H, B, and P.

<Aspect 9>

The secondary battery according to any of Aspects 1 to 8, wherein a difference between the formation energy $E_{MX}$ and the formation energy $E_{LiX}$ is 0.027 eV/atom or more.

<Aspect 10>

A manufacturing method for a secondary battery, comprising:

obtaining a laminated body comprising a positive electrode active material layer, a solid electrolyte layer, a negative electrode current collector, and a compound of a metal element M and an element X disposed between the solid electrolyte layer and the negative electrode current collector; and
charging the laminated body to supply lithium ions between the solid electrolyte layer and the negative electrode current collector to cause a conversion reaction of the compound of the metal element M and the element X to generate a first substance and a second substance, wherein the first substance is at least one of an alloy of Li and the element X and a compound of Li and the element X; and

the second substance is at least one of a simple substance of a metal element M, an alloy of Li and the metal element M, and a compound of Li and the metal element M.

ADVANTAGEOUS EFFECTS OF INVENTION

The secondary battery of the present disclosure comprises a metallic lithium negative electrode and has excellent coulombic efficiency.

BRIEF DESCRIPTION OF DRAWINGS

FIG. 1 schematically shows a configuration of a secondary battery 101.
FIG. 2 schematically shows a configuration of a secondary battery 102.
FIG. 3 schematically shows changes to the configurations of secondary batteries 101 and 102 due to charging and discharging.
FIG. 4 schematically shows the steps from lamination to charging in a manufacturing method of secondary batteries 101 and 102.
FIG. 5 schematically shows a configuration of an evaluation cell.
FIG. 6 is a graph comparing coulombic efficiencies of evaluation cells.
FIG. 7 shows the structure and Mg distribution in a cross-section of the evaluation cell of Comparative Example 3 before and after charging.
FIG. 8 shows the structure and Mg distribution in a cross-section of the evaluation cell of Example 3 before and after charging.
FIG. 9 shows the S, Mg, and Ni distributions in a cross-section of the evaluation cell of Example 3 after charging.
FIG. 10 shows CV measurement results of the evaluation cell of Example 3.
FIG. 11 shows XRD measurement results at a predetermined location in the evaluation cell of Example 3.
FIG. 12 shows the S, Mg, and Ni distributions in a cross-section of the evaluation cell of Example 4 after charging.

DESCRIPTION OF EMBODIMENTS

Hereinafter, a secondary battery and a manufacturing method therefor according to the embodiments will be described with reference to the drawings. However, the techniques of the present disclosure are not limited to the following embodiments.

1. Secondary battery (first embodiment)

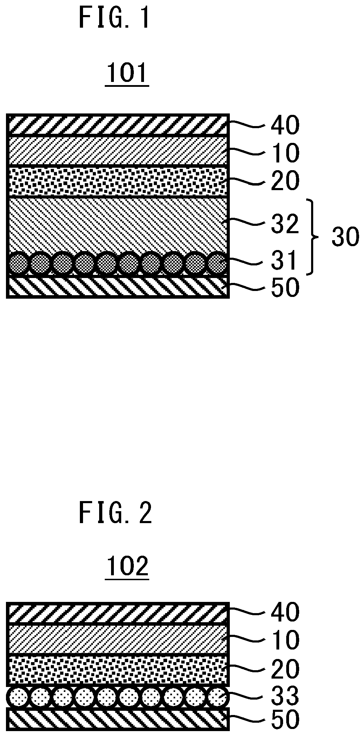

FIG. 1 schematically shows a configuration of a secondary battery 101 according to the first embodiment. As shown in FIG. 1, the secondary battery 101 comprises a positive electrode active material layer 10, a solid electrolyte layer 20, and a negative electrode active material layer 30. The negative electrode active material layer 30 comprises a first substance 31 and a second substance 32. The first substance 31 is at least one of an alloy of Li and an element X and a compound of Li and the element X. The second substance 32 is at least one of a simple substance of a metal element M, an alloy of Li and the metal element M, and a compound of Li and the metal element M. A formation energy $E_{LiX}$ of the first substance 31 is lower than a formation energy $E_{MX}$ of a compound of the metal element M and the element X.

1.1 Positive electrode active material layer

The positive electrode active material layer 10 comprises a positive electrode active material and may further optionally comprise an electrolyte, a conductive aid, or a binder. The positive electrode active material layer 10 may further comprise various additives. The content of each of the positive electrode active material, electrolyte, conductive aid, and binder in the positive electrode active material layer 10 may be appropriately determined according to target battery performance. For example, when the entire positive electrode active material layer 10 (total solid content) is set to 100% by mass, the content of the positive electrode active material may be 40% by mass or greater, 50% by mass or greater, or 60% by mass or greater, and may be 100% by mass or less or 90% by mass or less. The shape of the positive electrode active material layer 10 is not particularly limited, and may be, for example, a sheet having a substantially flat surface. The thickness of the positive electrode active material layer 10 is not particularly limited, and may be, for example, 0.1 $\mu$m or more, 1 $\mu$m or more, 10 $\mu$m or more, or 30 $\mu$m or more and 2 mm or less, 1 mm or less, 500 $\mu$m or less, or 100 $\mu$m or less.

1.1.1 Positive electrode active material

Any known positive electrode active material for secondary batteries that is capable of releasing Li ions during charging and occluding Li ions during discharging may be adopted as the positive electrode active material. For example, various lithium-containing oxides such as lithium cobaltate, lithium nickel oxide, $LiNi_{1/3}Co_{1/3}Mn_{1/3}O_2$, lithium manganate, and spinel-based lithium compounds can be used. Alternatively, elemental sulfur and compounds in which lithium is occluded in sulfur can be used as the positive electrode active material. Particularly, when the positive electrode active material layer 10 comprises a lithium-containing oxide as the positive electrode active material, Li ions can be more appropriately supplied from the positive electrode active material to the negative electrode side during charging, expansion or contraction of the positive electrode active material during charging and discharging is small, and high performance can be easily obtained. One type of positive electrode active material may be used alone, or two or more types may be used in combination. The positive electrode active material may be, for example, particulate, and the size thereof is not particularly limited. The particles of the positive electrode active material may be solid particles, hollow particles, or particles having voids. The particles of the positive electrode may be primary particles, or may be secondary particles of a plurality of aggregated primary particles. The average particle diameter (D50) of the positive electrode active material particles may be, for example, 1 nm or more, 5 nm or more, or 10 nm or more and 500 $\mu$m or less, 100 $\mu$m or less, 50 $\mu$m or less, or 30 $\mu$m or less. The average particle diameter D50 as described herein is a particle diameter (median diameter) at an integrated value of 50% in a volume-based particle size distribution determined by a laser diffraction or scattering method.

The surface of the positive electrode active material may be covered with an ion-conducting oxide. Specifically, a composite comprising the above positive electrode active material and an ion-conducting oxide covering the surface thereof may be contained in the positive electrode active material layer 10. As a result, a reaction between the positive electrode active material and a sulfide (for example, a sulfide solid electrolyte described below) can be easily suppressed. Examples of the ion-conducting oxide covering or protecting the surface of the positive electrode active material include at least one selected from $Li_3BO_3$, $LiBO_2$, $Li_2CO_3$, $LiAlO_2$, $Li_4SiO_4$, $Li_2SiO_3$, $Li_3PO_4$, $Li_2SO_4$, $Li_2TiO_3$, $Li_4Ti_5O_{12}$, $Li_2Ti_2O_5$, $Li_2ZrO_3$, $LiNbO_3$, $Li_2MoO_4$, and $Li_2WO_4$. The coverage (area ratio) of the ion-conducting oxide on the surface of the positive electrode active material may be, for example, 70% or greater, 80% or greater, or 90% or greater. The thickness of the layer of ion-conducting oxide may be, for example, 0.1 nm or more or 1 nm or more and 100 nm or less or 20 nm or less.

1.1.2 Electrolyte

The electrolyte that can be contained in the positive electrode active material layer 10 may be a solid electrolyte, a liquid electrolyte (electrolytic solution), or a combination thereof. Particularly, when the positive electrode active material layer 10 comprises a solid electrolyte (particularly, a sulfide solid electrolyte), a greater effect can be expected from the technique of the present disclosure.

Any solid electrolyte known as a solid electrolyte for secondary batteries may be used. The solid electrolyte may be an inorganic solid electrolyte or an organic polymer electrolyte. Particularly, the inorganic solid electrolyte has excellent ion-conducting property and heat resistance. Examples of the inorganic solid electrolyte include oxide solid electrolytes and sulfide solid electrolytes. Among the inorganic solid electrolytes, sulfide solid electrolytes, particularly sulfide solid electrolytes comprising at least Li, S, and P as constituent elements have high performance. The solid electrolyte may be amorphous or crystalline. The solid electrolyte may be, for example, particulate. The average particle diameter (D50) of the solid electrolyte may be, for example, 10 nm or more and 10 $\mu$m or less. The ion conductivity of the solid electrolyte at 25 °C may be, for example, $1 \times 10^{-4}$ S/cm or more or $1 \times 10^{-3}$ S/cm or more. One type of solid electrolyte may be used alone, or two or more types may be used in combination.

The oxide solid electrolyte may be one or more selected from lithium lanthanum zirconate, LiPON, $Li_{1+X}Al_XGe_{2-X}(PO_4)_3$, Li-SiO-based glass, and Li-Al-S-O-based glass.

The sulfide solid electrolyte may be a glass-based sulfide solid electrolyte (sulfide glass), a glass-ceramic-based sulfide solid electrolyte, or a crystalline sulfide solid electrolyte. The sulfide glass is amorphous. The sulfide glass may have a glass transition temperature (Tg). If the sulfide solid electrolyte has a crystal phase, examples of the crystal phase include Thio-LISICON type crystal phase, LGPS type crystal phase, and argyrodite type crystal phase.

The sulfide solid electrolyte may contain, for example, Li element, X element (X is at least one of P, As, Sb, Si, Ge, Sn, B, Al, Ga, and In), and S element. The sulfide solid electrolyte may further contain at least one of O element and a halogen element. Further, the sulfide solid electrolyte may contain S element as a main component of the anion element.

The sulfide solid electrolyte may be, for example, at least one selected from $Li_2S$-$P_2S_5$, $Li_2S$-$P_2S_5$-LiI, $Li_2S$-$P_2S_5$-$GeS_2$, $Li_2S$-$P_2S_5$-$Li_2O$, $Li_2S$-$P_2S_5$-$Li_2O$-LiI, $Li_2S$-$P_2S_5$-LiI-LiBr, $Li_2S$-$SiS_2$, $Li_2S$-$SiS_2$-LiI, $Li_2S$-$SiS_2$-LiBr, $Li_2S$-$SiS_2$-LiCl, $Li_2S$-$SiS_2$-$B_2S_3$-LiI, $Li_2S$-$SiS_2$-$P_2S_5$-LiI, $Li_2S$-$B_2S_3$, $Li_2S$-$P_2S_5$-ZmSn (wherein m and n are each a positive number; and Z is any of Ge, Zn, and Ga), $Li_2S$-$GeS_2$, $Li_2S$-$SiS_2$-$Li_3PO_4$, and $Li_2S$-$SiS_2$-$Li_xMO_y$ (wherein x and y are each a positive number; and M is any of P, Si, Ge, B, Al, Ga, and In).

The composition of the sulfide solid electrolyte is not particularly limited. Examples thereof include $xLi_2S \cdot (100 - x)P_2S_5$ ($70 \leq x \leq 80$) and $yLiI \cdot zLiBr \cdot (100 - y - z)(xLi_2S \cdot (1 - x)P_2S_5)$ ($0.7 \leq x \leq 0.8$; $0 \leq y \leq 30$; and $0 \leq z \leq 30$). Alternatively, the sulfide solid electrolyte may have a composition represented by a general formula: $Li_{4-x}Ge_{1-x}P_xS_4$ ($0 < x < 1$). In the above general formula, at least a portion of Ge may be substituted with at least one of Sb, Si, Sn, B, Al, Ga, In, Ti, Zr, V, and Nb. In the above general formula, at least a portion of P may be substituted with at least one of Sb, Si, B, Al, Ga, In, Ti, Zr, V, and Nb. In the above general formula, a portion of Li may be substituted with at least one of Na, K, Mg, Ca, and Zn. In the above general formula, a portion of S may be substituted with a halogen (at least one of F, Cl, Br, and I). Alternatively, the sulfide solid electrolyte may have a composition represented by $Li_{7-a}PS_{6-a}X_a$ (X is at least one of Cl, Br, and I; and $a$ is a number of 0 or greater and 2 or less). $a$ may be 0 or greater than 0. In case of the latter, $a$ may be 0.1 or greater, 0.5 or greater, or 1 or greater. In addition, $a$ may be 1.8 or less or 1.5 or less.

The electrolytic solution can comprise, for example, lithium ions as the carrier ion. The electrolytic solution may be, for example, a nonaqueous electrolytic solution. For example, a solution obtained by dissolving a lithium salt in a carbonate-based solvent at a predetermined concentration can be used as the electrolytic solution. Examples of the carbonate-based solvent include fluoroethylene carbonate (FEC), ethylene carbonate (EC), and dimethyl carbonate (DMC). Examples of the lithium salt include hexafluorophosphate.

1.1.3 Conductive aid

Examples of the conductive aid that can be contained in the positive electrode active material layer 10 include carbon materials such as vapor-grown carbon fiber (VGCF), acetylene black (AB), Ketjen black (KB), carbon nanotube (CNT), and carbon nanofiber (CNF); and metal materials such as nickel, aluminum, and stainless steel. The conductive aid may be, for example, particulate or fibrous, and the size thereof is not particularly limited. One type of conductive aid may be used alone, or two or more types may be used in combination.

1.1.4 Binder

Examples of the binder that can be contained in the positive electrode active material layer 10 include butadiene rubber (BR)-based binders, butylene rubber (IIR)-based binders, acrylate-butadiene rubber (ABR)-based binders, styrene-butadiene rubber (SBR)-based binders, polyvinylidene fluoride (PVdF)-based binders, polytetrafluoroethylene (PTFE)-based binders, polyimide (PI)-based binders, and polyacrylic acid-based binders. One type of binder may be used alone, or two or more types may be used in combination.

1.2 Solid electrolyte layer

The solid electrolyte layer 20 comprises at least a solid electrolyte. The solid electrolyte contained in the solid electrolyte layer 20 may be the same as or different from the solid electrolyte that can be contained in the above positive electrode active material layer 10. Particularly, when the solid electrolyte layer 20 comprises an inorganic solid electrolyte, a greater effect from the technique of the present disclosure can be expected. Examples of the inorganic solid electrolyte include the above oxide solid electrolytes and sulfide solid electrolytes. Among inorganic solid electrolytes, sulfide solid electrolytes, particularly sulfide solid electrolytes comprising at least Li, S, and P as constituent elements, have high performance. Specific examples of the oxide solid electrolyte and the sulfide solid electrolyte are as described above. The solid electrolyte layer 20 may further optionally comprise a binder and various additives. The binder that can be contained in the solid electrolyte layer 20 may be the same as or different from the binder that can be contained in the above positive electrode active material layer 10. In the solid electrolyte layer 20, for each of the solid electrolyte and the binder, one type thereof may be used alone, or two or more types may be used in combination. The solid electrolyte layer 20 may be formed entirely of a solid, or may comprise a solid electrolyte and a liquid. The contents of the solid electrolyte and the binder in the solid electrolyte layer 20 are not particularly limited. For example, when the entire solid electrolyte layer 20 (total solid content) is set to 100% by mass, the content of the solid electrolyte may be 50% by mass or greater, 60% by mass or greater, or 70% by mass or greater and 100% by mass or less or 90% by mass or less. The thickness of the solid electrolyte layer 20 is not particularly limited, and may be, for example, 0.1 μm or more or 1 μm or more and 2 mm or less or 1 mm or less.

1.3 Negative electrode active material layer

As shown in FIG. 1, the negative electrode active material layer 30 comprises a first substance 31 and a second substance 32. The first substance 31 is at least one of an alloy of Li and an element X and a compound of Li and the element X. The second substance 32 is at least one of a simple substance of a metal element M, an alloy of Li and the metal element M, and a compound of Li and the metal element M. The formation energy $E_{LiX}$ of the first substance 31 is lower than the formation energy $E_{MX}$ of a compound of the metal element M and the element X.

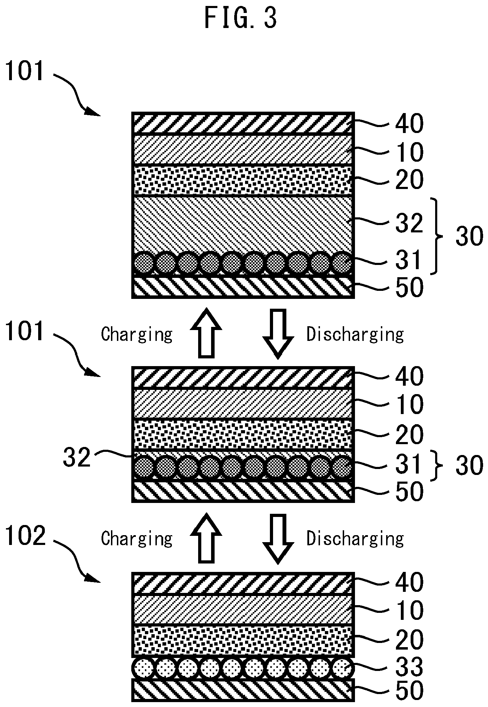

As shown in FIG. 3, during discharging of the secondary battery 101, Li ions are released from the first substance 31 (alloy or compound of Li and metal element M) and the second substance 32 (alloy or compound of Li and element X) contained in the negative electrode active material layer 30 to the positive electrode side, and the volume of the negative electrode active material layer 30 can change. The Li ions released from the negative electrode active material layer 30 reach the positive electrode active material layer 10 via the solid electrolyte layer 20 and can be occluded by the positive electrode active material contained in the positive electrode active material layer 10. As shown in FIG. 3, the secondary battery 101 after the discharging may have the same configuration as the secondary battery 102 according to the second embodiment described below. Alternatively, the secondary battery 101 may be controlled to stop discharging before reaching the same configuration as that of the secondary battery 102 according to the second embodiment described below. In other words, the secondary battery 101 after discharging may include a compound of the metal element M and the element X or the negative electrode active material layer 30 between the solid electrolyte layer 20 and the negative electrode current collector 50.

During charging of the secondary battery 101, Li ions are released from the positive electrode active material layer 10. Specifically, the Li ions released from the positive electrode active material layer 10 arrive between the solid electrolyte layer 20 and the negative electrode current collector 50 via the solid electrolyte layer 20, and can be deposited as the second substance 32 or metallic lithium. As shown in FIGS. 1 and 3, in the secondary battery 101 after discharging, the negative electrode active material layer 30 can be formed between the solid electrolyte layer 20 and the negative electrode current collector 50. The negative electrode active material layer 30 comprises the first substance 31 and the second substance 32 described above. The thickness of the negative electrode active material layer 30 after charging is not particularly limited, and may be, for example, 0.1 $\mu$m or more or 1 $\mu$m or more and 2 mm or less or 1 mm or less. The deposition amount of metallic lithium between the solid electrolyte layer 20 and the negative electrode current collector 50 is not particularly limited, and may be appropriately adjusted according to target battery performance. However, when the amount of metallic lithium deposited is excessive, there is a concern of concentration of pressure. In this regard, as a guideline for the deposition amount of metallic lithium, the amount may be such that the charge capacity of the secondary battery 101 is, for example, 1 mAh/cm$^2$ or more and 5 mAh/cm$^2$ or less.

1.3.1 First substance

The first substance 31 is at least one of an alloy of Li and an element X and a compound of Li and the element X. Specifically, in the first substance 31, the element X may form a solid solution with metallic Li, or may form a compound with metallic Li. In one embodiment, the negative electrode active material layer 30 comprises a compound of Li and the element X as the first substance 31. In one embodiment, the negative electrode active material layer 30 comprises an alloy of Li and the element X as the first substance 31. The molar ratio of Li to the element X is not particularly limited and depends on the element X and the first substance 31.

The formation energy $E_{LiX}$ of the first substance 31 is lower than the formation energy $E_{MX}$ of a compound of the metal element M and the element X. In other words, the element X has a relatively high reactivity with Li and a relatively low reactivity with the metal element M. As long as such a condition is satisfied, the element X constituting the first substance 31 is not particularly limited. The element X may be a metal element or a nonmetal element. For example, when the element X is at least one of H, B, and P, the first substance 31 has excellent lithium ion-conducting property, and the performance of the secondary battery 101 is more easily enhanced. For example, the first substance 31 may be at least one selected from compounds of Li and B, compounds of Li and P, compounds of Li and H, composite compounds thereof, or mixtures thereof. Alternatively, when the metal element M described below is Mg and the element X is at least one of Bi, Sb, In, Sn, H, I, Ga, Te, Hg, Cd, Si, B, As, Zn, Ge, Br, P, and Se, the performance of the secondary battery 101 is more easily enhanced.

The shape of the first substance 31 and the position of the first substance 31 in the negative electrode active material layer 30 are not particularly limited. The first substance 31 may be particulate, layered (including a layer of aggregated particles), or film-like (including a film of aggregated particles), or may be of an indeterminate shape. The first substance 31 may be dispersed or unevenly distributed in the negative electrode active material layer 30. Particularly, when the negative electrode active material layer 30 comprises the first substance 31 formed into a film and the thickness of the first substance 31 formed into the film is 10 nm or more and 50 $\mu$m or less, high performance is easily ensured. The thickness may be 30 nm or more and 40 $\mu$m or less, 50 nm or more and 30 $\mu$m or less, 70 nm or more and 20 $\mu$m or less, or 100 nm or more and 10 $\mu$m or less. Further, the thickness may be 0.05% or greater and 100% or less or 1% or greater and less than 100% of the total thickness of the negative electrode active material layer 30. When the negative electrode active material layer 30 comprises the first substance 31 formed into a film, the first substance 31 formed into the film may be or may not be in contact with the negative electrode current collector 50. Moreover, the first substance 31 formed into the film may be or may not be in contact with the solid electrolyte layer 20. Particularly, when the first substance 31 formed into the film is in contact with the negative electrode current collector 50, i.e., when the first substance 31 formed into the film covers the surface of the negative electrode current collector 50, the first substance 31 functions as a protective film, and high performance is easily ensured. The area of the first substance 31 formed into the film may be 50% or greater, 60% or greater, 70% or greater, 80% or greater, 90% or greater, 95% or greater, or 99% or greater of the area of the negative electrode active material layer 30 (area of the surface of the negative electrode active material layer 30 facing the negative electrode current collector 50).

The amount of the first substance 31 in the negative electrode active material layer 30 is not particularly limited. For example, the negative electrode active material layer 30 may comprise greater than 0% by mass and 80% by mass or less of the first substance 31. The amount of the first substance 31 may be 0.01% by mass or greater and 70% by mass or less, 0.1% by mass or greater and 60% by mass or less, 1% by mass or greater and 50% by mass or less, or 10% by mass or greater and 40% by mass or less.

1.3.2 Second substance

The second substance 32 is at least one of a simple substance of a metal element M, an alloy of Li and the metal element M, and a compound of Li and the metal element M. Specifically, in the second substance 32, the metal element M may be present as a single substance without being bonded to another element, may form a solid solution with metallic Li, or may form a compound with metallic Li. In one embodiment, the negative electrode active material layer 30 comprises a compound of Li and the metal element M as the second substance 32. In one embodiment, the negative electrode active material layer 30 comprises an alloy of Li and the metal element M as the second substance 32. The molar ratio of Li to the metal element M is not particularly limited and depends on the metal element M and the second substance 32.

As described above, the formation energy $E_{LiX}$ of the first substance 31 is lower than the formation energy $E_{MX}$ of a compound of the metal element M and the element X. In other words, each of the first substance 31 and the second substance 32 tends to be stable in the negative electrode active material layer 30. Specifically, a reaction between the element X constituting the first substance 31 and the metal element M constituting the second substance 32 is easily suppressed by Li. As long as such a condition is satisfied, the metal element M constituting the second substance 32 is not particularly limited. The metal element M may be an element alloyable with Li. When the metal element M is at least one of Mg, Sn, Zn, In, Al, Fe, Ni, Mn, Cr, Ag, Ga, Si, Sb, Pb, Bi, Cd, Sr, Ge, and As, particularly when the metal element M is Mg, in addition to satisfying the above relations in formation energy, deposition and dissolution reactions of Li during charging and discharging are likely to be uniform, and high performance is easily ensured. For example, the second substance 32 may be elemental Mg, an alloy of Li and Mg, or a compound of Li and Mg.

The shape of the second substance 32 and the position of the second substance 32 in the negative electrode active material layer 30 are not particularly limited. The second substance 32 may be particulate, layered (including an aggregation of a plurality of particles), or film-like (including an aggregation of a plurality of particles), or may be of an indeterminate shape. The second substance 32 may be dispersed or unevenly distributed in the negative electrode active material layer 30. Particularly, when the negative electrode active material layer 30 comprises the second substance 32 formed into a film and the thickness of the second substance 32 layer is 100 nm or more and 500 $\mu$m or less, high performance is easily ensured. When the negative electrode active material layer 30 comprises the second substance 32 formed into a film, the second substance 32 layer may or may not be in contact with the solid electrolyte layer 20. Further, the second substance 32 layer may or may not be in contact with the negative electrode current collector 50. Particularly, when the second substance 32 layer is in contact with the solid electrolyte layer 20, deposition and dissolution reactions of Li during charging and discharging are likely to be uniform, and high performance is easily ensured. The area of the second substance 32 layer may be 50% or greater, 60% or greater, 70% or greater, 80% or greater, 90% or greater, 95% or greater, or 99% or greater of the area of the negative electrode active material layer 30 (area of the surface of the negative electrode active material layer 30 facing the solid electrolyte layer 20).

The amount of the second substance 32 in the negative electrode active material layer 30 is not particularly limited. For example, the negative electrode active material layer 30 may comprise 1% by mass or greater and less than 100% by mass of the second substance 32.

1.3.3 Supplemental regarding metal element M and element X

In the secondary battery 101, when the metal element M and the element X satisfy the following relations (1) and (2), higher performance is easily ensured. Specifically, when the following relations (1) and (2) are satisfied, the compound of the metal element M and the element X is decomposed by the conversion reaction described below during charging of the secondary battery 101, and a reverse reaction of the conversion reaction occurs and the compound of the metal element M and the element X is easily reverted during discharging of the secondary battery 101.

(1) The formation energy $E_{MX}$ of a compound of the metal element M and the element X is lower than the formation energy $E_{LiM}$ of a compound of Li and the metal element M.

(2) The formation energy $E_{LiX}$ of a compound of Li and the element X is lower than the formation energy $E_{MX}$ of the compound of the metal element M and the element X.

In the secondary battery 101, it is considered that the larger the difference between the formation energy $E_{MX}$ and the formation energy $E_{LiX}$ described above, the more easily an excellent effect is ensured. In this regard, the difference $E_{MX} - E_{LiX}$ between the formation energy $E_{MX}$ and the formation energy $E_{LiX}$ in the secondary battery 101 may be 0.027 eV/atom or more, 0.032 eV/atom or more, 0.050 eV/atom or more, 0.075 eV/atom or more, 0.100 eV/atom or more, 0.150 eV/atom or more, or 0.200 eV/atom or more. Note that the formation energies $E_{MX}$, $E_{LiM}$, and $E_{LiX}$ can be verified with various databases.

1.3.4 Additional components

The negative electrode active material layer 30 may comprises additional components in addition to the above first substance 31 and second substance 32. For example, the negative electrode active material layer 30 may comprise a compound of the metal element M and the element X as an unreacted product of the conversion reaction described below. In addition, the negative electrode active material layer 30 can comprise metallic lithium deposited during charging. The "metallic lithium" herein is a concept which includes not only elemental lithium but also lithium alloys. That is, the negative electrode active material layer 30 may comprise elemental lithium or a lithium alloy. Examples of the lithium alloy includes the above second substance 32. Alternatively, the negative electrode active material layer 30 may comprise, for example, at least one lithium alloy selected from Li-Au, Li-Mg, Li-Sn, Li-Al, Li-B, Li-C, Li-Ca, Li-Ga, Li-Ge, Li-As, Li-Se, Li-Ru, Li-Rh, Li-Pd, Li-Ag, Li-Cd, Li-In, Li-Sb, Li-Ir, Li-Pt, Li-Hg, Li-Pb, Li-Bi, Li-Zn, Li-Tl, Li-Te, and Li-At, in addition to the above second substance 32. The lithium alloy may be of one type only or two or more types.

1.4 Additional features

As long as the secondary battery 101 includes at least the above features, additional features other than those above may be included. The features described below are examples of additional features that can be included in the secondary battery 101.

1.4.1 Positive electrode current collector

As shown in FIG. 1, the secondary battery 101 may comprise a positive electrode current collector 40 in contact with the positive electrode active material layer 10. Any positive electrode current collector that can function as a positive electrode current collector for secondary batteries can be adopted as the positive electrode current collector 40. The positive electrode current collector 40 may be a metal foil or a metal mesh. Particularly, a metal foil has excellent handleability. The positive electrode current collector 40 may be composed of a plurality of metal foils. Examples of the metal constituting the positive electrode current collector 40 include Cu, Ni, Cr, Au, Pt, Ag, Al, Fe, Ti, Zn, Co, and stainless steel. Particularly, from the viewpoint of ensuring oxidation resistance, the positive electrode current collector 40 may comprise Al. The positive electrode current collector 40 may have some coating layer on the surface thereof for the purpose of adjusting resistance and etc. Further, when the positive electrode current collector 40 is composed of a plurality of metal foils, some layer may be included between the plurality of metal foils. The thickness of the positive electrode current collector 40 is not particularly limited. For example, the thickness thereof may be 0.1 $\mu$m or more or 1 $\mu$m or more, and may be 1 mm or less or 100 $\mu$m or less.

1.4.2 Negative electrode current collector

As shown in FIG. 1, the secondary battery 101 may comprise a negative electrode current collector 50 in contact with the negative electrode active material layer 30. Any negative electrode current collector that can function as a negative electrode current collector for secondary batteries can be adopted as the negative electrode current collector 50. The negative electrode current collector 50 may be a metal foil or a metal mesh, or may be a carbon sheet. Particularly, a metal foil has excellent handleability. The negative electrode current collector 50 may be composed of a plurality of metal foils or sheets. Examples of the metal constituting the negative electrode current collector 50 include Cu, Ni, Cr, Au, Pt, Ag, Al, Fe, Ti, Zn, Co, and stainless steel. From the viewpoints of ensuring reduction resistance and making alloying with lithium difficult, the negative electrode current collector 50 may comprise at least one metal selected from Cu, Ni, and stainless steel, particularly at least one metal from Ni and stainless steel. The negative electrode current collector 50 may have some coating layer on the surface thereof. Further, when the negative electrode current collector 50 is composed of a plurality of metal foils, some layer may be included between the plurality of metal foils. The thickness of the negative electrode current collector 50 is not particularly limited. For example, the thickness thereof may be 0.1 $\mu$m or more or 1 $\mu$m or more, and may be 1 mm or less or 100 $\mu$m or less.

In the secondary battery 101, the negative electrode current collector 50 may have some protective layer on the surface thereof. For example, the above negative electrode current collector 50 may have a conductive substrate selected from the above metal foil, metal mesh, or carbon sheet and a protective layer formed on a surface of the conductive substrate, and the protective layer may be disposed between the conductive substrate and the above negative electrode active material layer 30. The protective layer, for example, may comprise Mg and may not comprise a compound of Mg and the element X. By including a negative electrode current collector 50 having a protective layer comprising Mg, it is considered that in addition to promoting diffusion of Li on the surface of the negative electrode current collector 50, affinity of metallic lithium for the negative electrode current collector 50 is increased, voids between the negative electrode current collector 50 and metallic lithium are suppressed, and metallic lithium is deposited more uniformly on the surface of the negative electrode current collector 50.

The protective layer may have the highest molar ratio of Mg among all constituent elements thereof. The molar ratio of Mg in the entire protective layer may be, for example, 50 mol% or greater and 100 mol% or less, and may be 70% mol% or greater, 80% mol% or greater, or 90% mol% or greater. The protective layer may be, for example, one of a metal thin film (for example, a vapor deposition film) containing Mg or a layer comprising Mg particles. Alternatively, the protective layer may be a layer containing only Mg particles. The metal thin film containing Mg can be composed of Mg or a Mg alloy. The Mg particles may be particles of elemental Mg, or may be particles containing Mg and an element other than Mg. Examples of the element other than Mg include various metal elements, semimetal elements, and nonmetal elements. For example, the Mg particles may be alloy particles (Mg alloy particles) containing Mg and a metal other than Mg. The Mg alloy particles may be an alloy containing Mg as the main component (an alloy in which Mg is 50 mol% or greater of all constituent elements). The Mg alloy particles, for example, may comprise at least one of Li, Au, Al, and Ni as the metal M other than Mg. The Mg alloy particles may or may not contain Li. The Mg alloy particles may comprise a $\beta$ single phase Li-Mg alloy. Alternatively, the Mg particles may be oxide particles (Mg oxide particles) containing Mg and O. The Mg oxide particles, for example, may be particles of an oxide consisting only of Mg and O, or may be particles of a composite oxide represented by Mg-M'-O (M' is at least one of Li, Au, Al, and Ni). When the Mg oxide particles comprise M', it is preferable that at least Li be contained as M'. M' may or may not contain a metal other than Li. In the former case, M' may be of one metal other than Li or two or more thereof. The Mg particles may be primary particles, or may be secondary particles of a plurality of aggregated primary particles. The average particle diameter (D50) of the Mg particles may be, for example, 100 nm or more and 100 $\mu$m or less, may be 200 nm or more, 300 nm or more, 400 nm or more, 500 nm or more, 600 nm or more, 700 nm or more, or 800 nm or more, and may be 50 $\mu$m or less, 40 $\mu$m or less, 30 $\mu$m or less, 20 $\mu$m or less, 10 $\mu$m or less, 5 $\mu$m or less, or 3 $\mu$m or less.

The thickness of the protective layer may be, for example, 10 nm or more and 10 $\mu$m or less. The thickness of the protective layer may be 50 nm or more or 100 nm or more, and may be 5 $\mu$m or less, 3 $\mu$m or less, 1 $\mu$m or less, or 700 nm or less. In the secondary battery 101, the negative electrode current collector 50 may not be provided with a protective layer, may be provided with one protective layer, or may be provided with two or more layers. Examples of a formation method of the protective layer include a method of film-forming a protective layer on the surface on the above conductive substrate constituting the negative electrode current collector 50 and a method of pressing Mg particles. As the method of film-forming a protective layer on the surface of the conductive substrate, for example, a PVD method such as vapor deposition or sputtering, a plating method such as electroplating or electroless plating, or an application method using a slurry can be adopted.

### 1.4.3 Outer packaging

For the secondary battery 101, each of the above components may be housed inside an outer packaging. More specifically, portions excluding tabs or terminals for outputting electric power from the secondary battery 101 to the outside may be housed inside the outer packaging. Any outer packaging known as an outer packaging for batteries can be adopted. For example, a laminate film may be used as an outer packaging. Further, a plurality of secondary batteries 101 may be electrically connected and optionally stacked to form a battery pack. In this case, the battery pack may be housed inside a known battery pack case.

### 1.4.4 Sealing resin

Each of the above components may be sealed with a resin in the secondary battery 101. For example, at least side surfaces (surfaces along stacking direction) of each layer shown in FIG. 1 may be sealed with a resin. As a result, entry of moisture into the inside of each layer is more easily suppressed. Any known curable resin or thermoplastic resin can be adopted as the sealing resin.

1.4.5 Restraining member

The secondary battery 101 may include a restraining member for restraining each of the above member in the thickness direction. By applying a restraining pressure with the restraining member, internal resistance of the battery is easily decreased. The restraining pressure by the restraining member is not particularly limited. The restraining pressure by the restraining member may be 5 MPa or less, 3 MPa or less, or 1 MPa or less.

2. Secondary battery (second embodiment)

FIG. 2 shows a configuration of a secondary battery 102 according to the second embodiment. As shown in FIG. 2, the secondary battery 102 comprises a positive electrode active material layer 10, a solid electrolyte layer 20, a negative electrode current collector 50, and metallic lithium deposited between the solid electrolyte layer 20 and the negative electrode current collector 50 by charging. A compound 33 of a metal element M and an element X is present between the solid electrolyte layer 20 and the negative electrode current collector 50. The formation energy $E_{MX}$ of the compound 33 of the metal element M and the element X is higher than the formation energy $E_{LiX}$ of a compound (corresponding to the first substance 31 of the first embodiment above) of Li and the element X.

2.1 Positive electrode active material layer, solid electrolyte layer, and negative electrode current collector

The positive electrode active material layer 10, the solid electrolyte layer 20, and the negative electrode current collector 50 may be the same as those of the first embodiment. As shown in FIG. 3, during charging of the secondary battery 102, Li ions released from the positive electrode active material layer 10 arrive between the solid electrolyte layer 20 and the negative electrode current collector 50 via the solid electrolyte layer 20 and are deposited as metallic lithium by accepting electrons. During discharging of the battery, the metallic lithium between the solid electrolyte layer 20 and the negative electrode current collector 50 is dissolved (ionized) and returns to the positive electrode active material layer 10.

2.2 Metallic lithium as negative electrode active material

The secondary battery 102 comprise a lithium deposition-type negative electrode. Specifically, as shown in FIGS. 2 and 3, metallic lithium is deposited between the solid electrolyte layer 20 and the negative electrode current collector 50 by charging. The metallic lithium deposited between the solid electrolyte layer 20 and the negative electrode current collector 50 is dissolved (ionized) during discharging and returns to the positive electrode active material layer 10. The "metallic lithium" herein is a concept which includes not only elemental lithium but also lithium alloys. Specifically, in the secondary battery 102, metallic lithium may be deposited as elemental lithium or as an alloy with another metal. Specific examples of the lithium alloy are as described above. In the secondary battery 102, a predetermined compound 33 is present between the solid electrolyte layer 20 and the negative electrode current collector 50. In this case, during charging, lithium supplied from the positive electrode active material layer 10 to between the solid electrolyte layer 20 and the negative electrode current collector 50 causes a conversion reaction of the compound 33, a compound or alloy (corresponding to first substance 31) of lithium and the element X is generated while a fresh metal M (corresponding to second substance 32) is generated, the fresh metal M and lithium are alloyed, and a lithium alloy (corresponding to second substance 32) as the metallic lithium or a compound (corresponding to second substance 32) of the metal element M and Li can be deposited.

2.3 Compound of metal element M and element X

The compound 33 of the metal element M and the element X is present between the solid electrolyte layer 20 and the negative electrode current collector 50. The formation energy $E_{MX}$ of the compound 33 of the metal element M and the element X is higher than the formation energy $E_{LiX}$ of the compound (corresponding to first substance 31) of Li and the element X. Specifically, a compound of Li and the element X is more easily generated than a compound 33 of the metal element M and the element X. Thus, when Li ions are supplied between the solid electrolyte layer 20 and the negative electrode current collector 50 during charging of the secondary battery 102, the compound 33 present between the solid electrolyte layer 20 and the negative electrode current collector 50 is decomposed by a conversion reaction as represented by the following reaction equation (1) to form a compound (corresponding to first substance 31) of Li and the element X and a fresh metal M (corresponding to second substance 32). When charging further progresses, the fresh metal element M and Li cause a reaction as indicated in the following reaction equation (2), and a lithium alloy (corresponding to first substance 31) as the metallic lithium or a compound (corresponding to second substance 32) of the metal element M and Li is deposited.

$$MX + Li \rightarrow LiX + M \dots \qquad (1)$$

$$Li + M \rightarrow LiM \dots \qquad (2)$$

The metal element M may be any element as long as the above relation in formation energy is satisfied and the above conversion reaction can proceed. The metal element M may be an element alloyable with Li. When the metal element M is at least one of Mg, Sn, Zn, In, Al, Fe, Ni, Mn, Cr, Ag, Ga, Si, Sb, Pb, Bi, Cd, Sr, Ge, and As, particularly when the metal element M is Mg, deposition and dissolution reactions of Li during charging and discharging are likely to be uniform, and high performance is easily ensured.

The element X may also be any element as long as the above relation in formation energy is satisfied and the above conversion reaction can proceed. The element X may be a metal element or a nonmetal element. Particularly, when the product (first substance 31) after the conversion reaction has excellent lithium ion-conducting property, the performance of the secondary battery is more easily enhanced. In consideration of a more efficient conversion reaction and generation of a product having excellent lithium ion-conducting property, the element X may be at least one of H, B, and P. Alternatively, when the metal element M is Mg, and the element X is at least one of Bi, Sb, In, Sn, H, I, Ga, Te, Hg, Cd, Si, B, As, Zn, Ge, Br, P, and Se, higher performance is easily ensured.

The compound 33 of the metal element M and the element X may be at least one selected from compounds of Mg and B (for example, magnesium diboride: $MgB_2$), compounds of Mg and P (for example, magnesium phosphide: $Mg_3P_2$), compounds of Mg and H (for example, magnesium hydride: $MgH_2$), composite compounds thereof, and mixtures thereof.

In the secondary battery 102, in the same manner as in the secondary battery 101, when the metal element M and the element X satisfy the following relations (1) and (2), higher performance is easily ensured. Specifically, when the following relations (1) and (2) are satisfied, a compound of the metal element M and the element X is decomposed by the above conversion reaction during charging of the secondary battery 102, and a reverse reaction of the conversion reaction occurs and the compound of the metal element M and the element X is easily reverted during discharging of the secondary battery 102.

(1) The formation energy $E_{MX}$ of a compound of the metal element M and the element X is lower than the formation energy $E_{LiM}$ of a compound of Li and the metal element M.
(2) The formation energy $E_{LiX}$ of a compound of Li and the element X is lower than the formation energy $E_{MX}$ of a compound of the metal element M and the element X.

The shape of the compound 33 of the metal element M and the element X is not particularly limited, and may be of a thin film or layer, may be particulate, or may be of a layer comprising the compound 33 in particulate form. As described in detail in the manufacturing method of the secondary batteries 101 and 102, the compound 33 may cover the surface of the negative electrode current collector 50. In addition, as shown in FIG. 2, the compound 33 may be in contact with the solid electrolyte layer 20 before the conversion reaction. When the compound 33 is particulate, the average particle diameter (D50) thereof may be, for example, 100 nm or more and 100 $\mu$m or less, and may be 200 nm or more, 400 nm or more, 600 nm or more, 800 nm or more, 1 $\mu$m or more, 5 $\mu$m or more, or 10 $\mu$m or more and 90 $\mu$m or less, 80 $\mu$m or less, 70 $\mu$m or less, 60 $\mu$m or less, or 50 $\mu$m or less. The amount of the compound 33 between the solid electrolyte layer 20 and the negative electrode current collector 50 is not particularly limited, and may be appropriately determined in consideration of battery performance. For example, when the compound 33 is present between the solid electrolyte layer 20 and the negative electrode current collector 50 as a thin film or layer, the thickness thereof may be 10 nm or more and 100 $\mu$m or less, and may be 20 nm or more, 30 nm or more, 40 nm or more, 100 nm or more, 200 nm or more, 400 nm or more, 600 nm or more, 800 nm or more, 1 $\mu$m or more, 5 $\mu$m or more, or 10 $\mu$m or more and 90 $\mu$m or less, 80 $\mu$m or less, 70 $\mu$m or less, 60 $\mu$m or less, 50 $\mu$m or less, 40 $\mu$m or less, 30 $\mu$m or less, 20 $\mu$m or less, 10 $\mu$m or less, 1 $\mu$m or less, or 800 nm or less. When a layer composed of particles of the compound 33 is formed between the solid electrolyte layer 20 and the negative electrode current collector 50, the number of particles in the thickness direction of the layer may be 1 or greater.

In the secondary battery 102, in the same manner as in the secondary battery 101, it is considered that the larger the difference between the formation energy $E_{MX}$ and the formation energy $E_{LiX}$, the more easily the above conversion reaction proceeds, and in turn the more easily the above effect is ensured. In this regard, the difference $E_{MX} - E_{LiX}$ between the formation energy $E_{MX}$ and the formation energy $E_{LiX}$ in the secondary battery 102 may be 0.027 eV/atom or more, 0.032 eV/atom or more, 0.050 eV/atom or more, 0.075 eV/atom or more, 0.100 eV/atom or more, 0.150 eV/atom or more, or 0.200 eV/atom or more.

2.4 Compound of Li and element X

As described above, a compound of Li and the element X can be generated by a conversion reaction of the compound 33 of the metal element M and the element X in the secondary battery 102. The type of the compound of Li and the element X depends on the type of the compound 33. As described above, when the element X is at least one of H, B, and P, a more efficient conversion reaction of the compound 33 can occur, and a product having excellent lithium ion-conducting property can be generated. Specifically, the compound of Li and the element X may be at least one selected from compound of Li and B, compounds of Li and P, compounds of Li and H, composite compounds thereof, and mixtures thereof. The shape of the compound of Li and the element X depends on the shape of the compound 33. Specifically, the shape of the compound of Li and the element X may be of a thin film or layer, may be particulate, or may be of a layer comprising the compound in particulate form, as described above. The amount of the compound of Li and the element X between the solid electrolyte layer 20 and the negative electrode current collector 50 after the conversion reaction depends on the amount of the compound 33. The compound of Li and the element X, for example, may cover the surface of the negative electrode current collector 50 to protect the negative electrode current collector 50.

2.5 Additional features

As long as the secondary battery 102 includes at least the above features, additional features other than those above may be included. The additional features are the same as those described for the first embodiment. For example, the secondary battery 102 may comprise a positive electrode current collector 40. In addition, the secondary battery 102 may comprise a predetermined outer packaging. Further, the secondary battery 102 may comprise a predetermined sealing resin. Moreover, the secondary battery 102 may comprise a predetermined restraining member.

3. Functions and effects of secondary batteries (first embodiment and second embodiment)

According to findings of the present inventors, when deposition and dissolution of metallic lithium between a solid electrolyte layer and a negative electrode current collector are repeated in a conventional secondary battery comprising a metallic lithium negative electrode, metallic lithium is unevenly deposited and dissolved, voids are generated between the solid electrolyte layer and the metallic lithium, and coulombic efficiency deteriorates. When metallic lithium is unevenly deposited and dissolved, in addition to increasing the resistance of the secondary battery, cycle characteristics also easily deteriorate. In contrast, according to the secondary batteries 101 and 102 of the present disclosure, for example, voids during deposition of metallic lithium presumably can be suppressed, and coulombic efficiency can be improved, as specifically described below.

3.1 Function and effect of secondary battery (first embodiment)

As shown in FIG. 3, during discharging of the secondary battery 101, the second substance 32 releases Li ions, and a fresh metal M is generated accordingly. The fresh metal M functions as a deposition site for metallic lithium (second substance 32) during charging of the secondary battery 101, and metallic lithium is likely to be deposited uniformly, gradually, and efficiently. By suppressing uneven deposition of metallic lithium, the secondary battery 101 has excellent coulombic efficiency. In addition, as described in FIG. 3, during discharging of the secondary battery 101, the first substance 31 may release Li ions or may remain as the first substance 31. When the first substance 31 releases Li ions, the remaining portion of the element X can react with the above fresh metal M. As a result, a compound 33 (MX) of the metal element M and the element X may be generated. The compound 33 can react with Li ions during charging of the secondary battery 101 to cause the above conversion reaction, and a first substance 31 (LiX) and a fresh metal M can be generated. The fresh metal M, as described above, functions as a deposition site for metallic lithium, and metallic lithium (second substance 32) is deposited uniformly and gradually during charging of the secondary battery 101.

As described above, due to charging and discharging of the secondary battery 101, a fresh metal M that acts as a deposition site for metallic lithium during charging is contained in a negative electrode active material layer 30. Specifically, during charging of the secondary battery 101, metallic lithium (Li-M alloy) can be deposited uniformly, gradually, and efficiently on the fresh metal M as a starting point. The affinity of the deposited Li for the solid electrolyte layer 20 is increased, and formation of voids at the interface between the solid electrolyte layer 20 and the deposited Li is easily suppressed. Further, voids in the negative electrode active material layer 30 are easily suppressed. By suppressing uneven deposition of metallic lithium, a secondary battery 101 having excellent coulombic efficiency is obtained. When a first substance 31 (LiX) and a second substance (fresh metal M) are generated in the negative electrode active material layer 30 by the above conversion reaction, a layer composed of LiX and the fresh metal M and having a storage structure is formed, whereby a decrease in volume change of the secondary battery during charging and discharging can be expected.

3.2 Function and effect of secondary battery (second embodiment)

As described above, during charging of the secondary battery 102, the compound 33 of the metal element M and the element X reacts with Li ions, a fresh metal M can be generated between the solid electrolyte layer 20 and the negative electrode current collector 50 (for example, the interface between the solid electrolyte layer 20 and the compound 33 or the interface between the solid electrolyte layer 20 and the compound (first substance 31) of Li and the element X) by the above conversion reaction, and metallic lithium can be deposited uniformly, gradually, and efficiently on the fresh metal M between the solid electrolyte layer 20 and the negative electrode current collector 50 as a starting point. Thus, it is considered that voids between the solid electrolyte layer 20 and the negative electrode current collector 50 during deposition of metallic lithium can be suppressed. In addition, it is considered that the affinity of metallic lithium for the solid electrolyte layer 20 is easily increased, and voids at the interface between the solid electrolyte layer 20 and the metallic lithium can be suppressed. By suppressing voids between the solid electrolyte layer 20 and the negative electrode current collector 50, reaction irregularity during charging and discharging is eliminated, and coulombic efficiency for the secondary battery is easily improved. Further, when LiX and a fresh metal M are generated between the solid electrolyte layer 20 and negative electrode current collector 50 by the above conversion reaction, a layer composed of LiX and the fresh metal M and having a storage structure is formed, whereby a decrease in volume change of the secondary battery during charging and discharging can be expected.

3.3 Supplemental

Although the above descriptions focus on the structural features of the secondary batteries 101 and 102 of the present disclosure, the secondary batteries 101 and 102 can be specified from the viewpoint of the functions thereof, as follows.

The secondary battery 101 according to the first embodiment may be configured so that, for example, the element X of the first substance 31 and the metal element M of the second substance 32 react with each other during discharging to generate a compound 33 of the metal element M and the element X. More specifically, the secondary battery 101 may be configured so that the element X of the first substance 31 and the metal element M of the second substance 32 react with each other during discharging to generate a compound 33 of the metal element M and the element X on one or both of the surface of the solid electrolyte layer 20 and the surface of the negative electrode current collector 50. In one embodiment, the secondary battery 101 can be configured so that the element X of the first substance 31 and the metal element M of the second substance 32 react with each other during discharging to generate a compound 33 of the metal element M and the element X on the surface of the negative electrode current collector 50.

The secondary battery 102 according to the second embodiment may be configured so that, for example, the compound 33 of the metal element M and the element X decomposes during charging to generate a compound of Li and the element X. More specifically, the secondary battery 102 may be configured so that the compound 33 of the metal element M and the element X decomposes during charging to generate a compound of Li and the element X on one or both of the surface of the solid electrolyte layer 20 and the surface of the negative electrode current collector 50. In one embodiment, the secondary battery 102 can be configured so that the compound 33 of the metal element M and the element X decomposes during charging to generate a compound (first substance 31) of Li and the element X on the surface of the negative electrode current collector 50.

As shown in FIGS. 1 to 3, the secondary battery of the present disclosure can be said to have different structures before and after the conversion reaction. Specifically, a compound 33 of a metal element M and an element X may be present between the solid electrolyte layer 20 and the negative electrode current collector 50 before the conversion reaction (for example, before charging), and an alloy or compound (first substance 31) of Li and an element X may be present between the solid electrolyte layer 20 and the negative electrode current collector 50 after the conversion reaction (for example, after charging). In other words, a secondary battery after the conversion reaction has the same configuration as the secondary battery 101 according to the first embodiment above, and a secondary battery before the conversion reaction has the same configuration as the secondary battery 102 according to the second embodiment above.

4. Manufacturing method of secondary battery

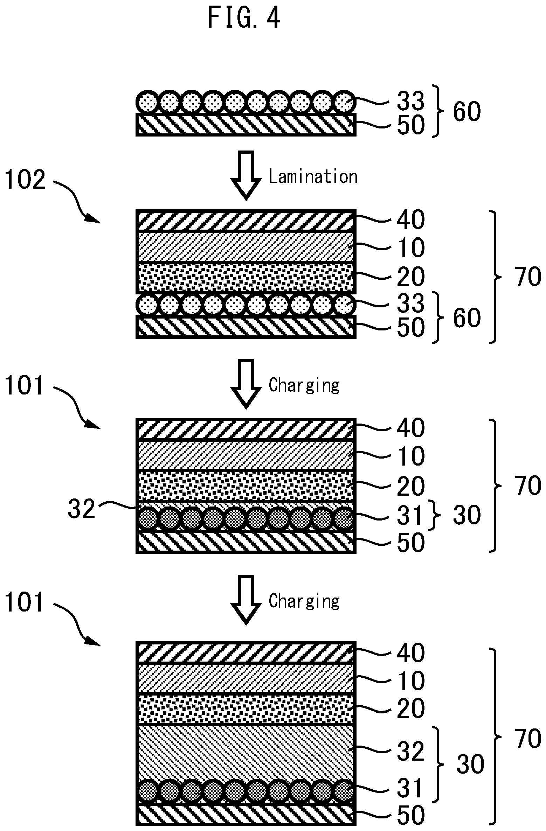

The above secondary batteries 101 and 102 can be manufactured, for example, as follows. Specifically, as shown in FIG. 4, the manufacturing method for a secondary battery 101 or 102 according to one embodiment may comprise: obtaining a laminated body 70 comprising a positive electrode active material layer 10, a solid electrolyte layer 20, a negative electrode current collector 50, and a compound 33 of a metal element M and an element X disposed between the solid electrolyte layer 20 and the negative electrode current collector 50; and charging the laminated body 70 to supply lithium ions between the solid electrolyte layer 20 and the negative electrode current collector 50 to cause a conversion reaction of the compound 33 of the metal element M and the element X to generate a first substance 31 and a second substance 32. The first substance 31 is at least one of an alloy of Li and an element X and a compound of Li and the element X, and the second substance 32 is at least one of a simple substance of a metal element M, an alloy of Li and the metal element M, and a compound of Li and the metal element M. As shown in FIG. 4, the laminated body 70 may be obtained as follows. Specifically, the manufacturing method of the present disclosure may comprise covering a surface of the negative electrode current collector 50 with a compound 33 of the metal element M and the element X to obtain a covered product 60, and laminating a positive electrode current collector 40, the positive electrode active material layer 10, the solid electrolyte layer 20, and the covered product 60 together to obtain the laminated body 70.

### 4.1 Covering

As shown in FIG. 4, in the manufacturing method according to the present embodiment, a surface of the negative electrode current collector 50 may be covered with a compound 33 of a metal element M and an element X to obtain a covered product 60. The negative electrode current collector 50 can optionally have a protective layer, as described above. The method of covering the surface of the negative electrode current collector 50 with the compound 33 is not particularly limited. For example, the negative electrode current collector 50 can be covered with the compound 33 by an application method using a solution or slurry. Alternatively, after obtaining a transfer material having a layer composed of the compound 33 formed on a substrate, the compound 33 may be transferred from the transfer material to the surface of the negative electrode current collector 50. Alternatively, the surface of the negative electrode current collector 50 may be covered with the compound 33 by, for example, sputtering. The metal element M and the element X are as described above. Specifically, the metal element M may be Mg. The element X may be at least one of Bi, Sb, In, Sn, H, I, Ga, Te, Hg, Cd, Si, B, As, Zn, Ge, Br, P, and Se, or may be at least one of H, B, and P.

### 4.2 Production of laminated body

As shown in FIG. 4, a laminated body 70 comprising a positive electrode active material layer 10, a solid electrolyte layer 20, a compound 33, and a negative electrode current collector 50 in this order may be obtained using the above covered product 60 in the manufacturing method according to the present embodiment. As shown in FIG. 4, the laminated body 70 may comprise a positive electrode current collector 40 in contact with the positive electrode active material layer 10. The laminated body 70 is easily obtained by, for example, molding and laminating the positive electrode current collector 40, the positive electrode active material layer 10, the solid electrolyte layer 20, the compound 33, and the negative electrode current collector 50 described above in this order by application, transfer, adhesion, or compression. The laminated body 70 may comprise at least one layer of each of the positive electrode current collector 40, the positive electrode active material layer 10, the solid electrolyte layer 20, the compound 33, and the negative electrode current collector 50. The laminated body 70 may comprise at least one laminated unit of the positive electrode current collector 40, the positive electrode active material layer 10, the solid electrolyte layer 20, the compound 33, and the negative electrode current collector 50 described above, or may comprise a plurality of the laminated units. In the laminated body 70, a plurality of laminated units may be electrically connected in series or in parallel, or may not be electrically connected. As clearly shown in FIGS. 2 and 4, the laminated body 70 before charging, which will be described below, can adopt the same configuration as that of the secondary battery 102 according to the second embodiment.

Before or after obtaining the above laminated body 70, pressure may be applied in the thickness direction (laminating direction) to each layer or the laminated body 70 described above. For example, the layers forming the laminated body 70 may be integrated by pressing, and the interfacial resistance may be decreased by eliminating gaps between the layers forming the laminated body 70. Each layer or the laminated body 70 can be compressed by a known means. For example, each layer or the laminated body 70 can be compressed in the laminating direction by various compression methods such as CIP, HIP, roll pressing, uniaxial pressing, and mold pressing. The magnitude of the pressure applied to each layer or the laminated body 70 in the laminating direction can be appropriately determined according to the target battery performance. For example, when a sulfide solid electrolyte is contained in each layer or the laminated body 70, the pressure may be 100 MPa or more, 150 MPa or more, 200 MPa or more, 250 MPa or more, 300 MPa or more, or 350 MPa or more, from the viewpoint of plastically deforming the sulfide solid electrolyte to easily carry out the integration and gap elimination described above. The compression time and compression temperature of each layer or the laminated body 70 are not particularly limited.

### 4.3 Charging

As shown in FIG. 4, in the manufacturing method according to the present embodiment, the laminated body 70 obtained as described above undergoes charging to deposit metallic lithium between the solid electrolyte layer 20 and the negative electrode current collector 50. Specifically, by charging the laminated body 70, lithium ions are conducted from the positive electrode active material contained in the positive electrode active material layer 10 to the negative electrode current collector 50 side via the solid electrolyte layer 20, and the lithium ions accept electrons and are deposited as metallic lithium between the solid electrolyte layer 20 and the negative electrode current collector 50. At this time, a conversion reaction of the compound 33 occurs, a fresh metal M (second substance 32) is generated together with an alloy or compound (first substance 31) of Li and an element X, and the alloy or compound (second substance 32) of Li and the metal element M can be deposited using the metal M as a starting point. The charging may be, for example, the initial charging after the laminated body 70 is prepared. The laminated body 70 may be charged by the same method as a general battery charging method. Specifically, an external power source may be connected to the positive electrode current collector 40 and the negative electrode current collector 50 of the laminated body 70 to carry out charging. As clearly shown in FIGS. 1 and 4, the above laminated body 70 after charging can adopt the same configuration as the secondary battery 101 according to the first embodiment.

4.4 Additional steps

The manufacturing method according to the present embodiment may comprise general steps for manufacturing a secondary battery, in addition to the steps described above. For example, the general steps include a step of housing the laminated body 70 inside an outer packaging such as a laminate film and a step of connecting current collector tabs to the laminated body 70. Specifically, for example, after connecting current collector tabs to current collectors 40 and 50 of the laminated body 70 (a portion of the current collector 40 or 50 may be protruded and used as a tab), while the laminated body 70 is housed in a laminate film as an outer packaging, the laminate film may be sealed with tabs pulled out to outside the laminate film, followed by charging of the laminated body 70 via the tabs outside the laminate film.

The manufacturing method according to the present embodiment may comprise selecting a compound 33 of a metal element M and an element X, and may comprise verifying that the metal element M and the element X satisfy the following relations (1) and (2) when selecting the compound 33 of the metal element M and the element X. As a result, a more suitable compound 33 can be efficiently selected. Each formation energy can be verified, for example, with various databases.

(1) The formation energy $E_{MX}$ of a compound of a metal element M and an element X is lower than the formation energy $E_{LiM}$ of a compound of Li and the metal element M.

(2) The formation energy $E_{LiX}$ of a compound of Li and an element X is lower than the formation energy $E_{MX}$ of a compound of a metal element M and the element X.

5. Vehicle comprising secondary battery

As described above, the secondary battery of the present disclosure can suppress voids in the negative electrode active material layer and has excellent coulombic efficiency. Such a secondary battery can be suitably used, for example, in at least one type of vehicle selected from hybrid electric vehicle (HEV), plug-in hybrid electric vehicle (PHEV), and battery electric vehicle (BEV). Specifically, the technique of the present disclosure has an aspect as a vehicle having a secondary battery, wherein the secondary battery comprises the following configuration (A) or (B):

(A) the secondary battery comprises a positive electrode active material layer, a solid electrolyte layer, and a negative electrode active material layer, wherein

the negative electrode active material layer comprises a first substance and a second substance, wherein the first substance is at least one of an alloy of Li and an element X and a compound of Li and the element X; the second substance is at least one of a simple substance of a metal element M, an alloy of Li and the metal element M, and a compound of Li and the metal element M; and a formation energy $E_{LiX}$ of the first substance is lower than a formation energy $E_{MX}$ of a compound of the metal element M and the element X;

(B) the secondary battery comprises a positive electrode active material layer, a solid electrolyte layer, a negative electrode current collector, and metallic lithium deposited between the solid electrolyte layer and the negative electrode current collector by charging, wherein

a compound of a metal element M and an element X is present between the solid electrolyte layer and the negative electrode current collector; and a formation energy $E_{MX}$ of a compound of the metal element M and the element X is higher than a formation energy $E_{LiX}$ of a compound of Li and the element X.

Details of the secondary battery configurations are as described above.

6. Conditioning method of secondary battery

The technique of the present disclosure also has an aspect as a conditioning method of a secondary battery. Specifically, the conditioning method of the present disclosure comprises preparing a secondary battery comprising a positive electrode active material layer, a solid electrolyte layer, a negative electrode current collector, and a compound of a metal element M and an element X disposed between the solid electrolyte layer and the negative electrode current collector; and charging the secondary battery to supply lithium ions between the solid electrolyte layer and the negative electrode current collector to cause a conversion reaction of the compound of the metal element M and the element X to generate a compound of Li and the element X. As a result, as described above, coulombic efficiency of the secondary battery can be increased.

EXAMPLES

From the foregoing, one embodiment of the technique of the present disclosure has been described. However, the technique of the present disclosure can be modified in various ways other than the above embodiment without departing from the spirit of the invention. Hereinafter, the technique of the present disclosure will be further described in detail with reference to the Examples. However, the technique of the present disclosure is not limited to the following Examples.

1. Production of MgX-coated current collector

A powder composed of MgX was pulverized in a mortar for 10 min and classified with a 40-$\mu$m classifier. 350 mg of mesitylene, 22 mg of a mesitylene solution with 5 wt% styrene-butadiene rubber (SBR), and 200 mg of the MgX powder were then charged in a container and dispersed for 30 s with an ultrasonic dispersion apparatus. Subsequently, the dispersion was mixed for 3 min with a shaker and further dispersed for 30 s with an ultrasonic dispersion apparatus to obtain a MgX slurry. A Ni foil as a negative electrode current collector was adhered to a glass substrate, and the MgX slurry was then evenly applied to the surface of the Ni foil with an applicator to obtain an MgX-coated current collector. The thickness of the MgX layer was 10 $\mu$m, and the basis weight was 0.2 mg/cm$^2$. In the present Examples, one of $MgF_2$, $MgB_2$, $Mg_3P_2$, and $MgH_2$ was adopted as MgX.

2. Production of Mg-coated current collector

Mg was vapor-deposited on a surface of a Ni foil to obtain a Mg-coated current collector (Mg-Ni foil). The thickness of the Mg layer was 700 nm.

3. Preparation of uncoated current collector

A Ni foil not coated with MgX or Mg was prepared.

4. Production of evaluation cell

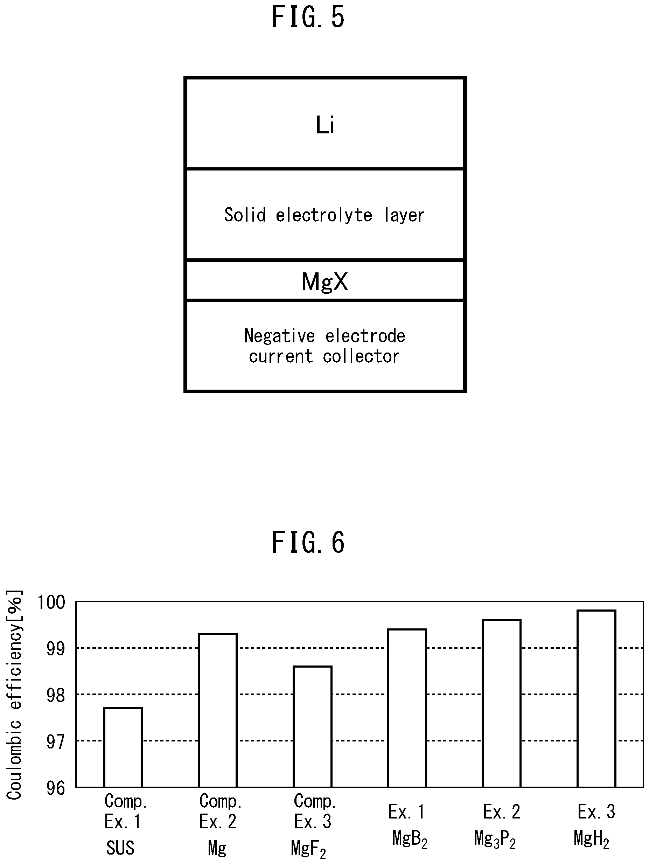

As shown in FIG. 5, a Li metal layer, a solid electrolyte layer, and the above current collector were laminated to obtain an evaluation cell. Specifically, 101.7 mg of a sulfide-based solid electrolyte ($Li_2S$-$P_2S_5$-based material comprising LiBr and LiI) was prepared and compression-molded at a pressure of 1 ton/cm$^2$ to obtain a solid electrolyte layer. The negative electrode current collector was then set under the solid electrolyte layer and compression-molded at a pressure of 1 ton/cm$^2$ to obtain a laminated body of a solid electrolyte layer and a negative electrode current collector. Further, a Li foil was set above the solid electrolyte layer of the laminated body and compression-molded, followed by restraining at 2 N•m to obtain an evaluation cell.

4.1 Comparative Example 1

Using the uncoated current collector (Ni foil), an evaluation cell as described above was produced.

4.2 Comparative Example 2

Using the Mg-coated current collector (Mg-coated Ni foil), an evaluation cell as described above was produced.

4.3 Comparative Example 3

Using a MgF$_2$-coated current collector (MgF$_2$-coated Ni foil) as the MgX-coated current collector, an evaluation cell as described above was produced.

4.4 Example 1

Using a MgB$_2$-coated current collector (MgB$_2$-coated Ni foil) as the MgX-coated current collector, an evaluation cell as described above was produced.

4.5 Example 2

Using a Mg$_3$P$_2$-coated current collector (Mg$_3$P$_2$-coated Ni foil) as the MgX-coated current collector, an evaluation cell as described above was produced.

4.6 Example 3

Using a MgH$_2$-coated current collector (MgH$_2$-coated Ni foil) as the MgX-coated current collector, an evaluation cell as described above was produced.

5. Evaluation of coulombic efficiency

The evaluation cell was left to stand in a thermostatic chamber at 60 °C for 3 h to uniformize the cell temperature. Next, the evaluation cell was charged at a constant current at a current density of 435 $\mu$A/cm$^2$ to deposit Li, and charging was stopped when the charge capacity reached 4.35 mAh/cm$^2$. After 10 min, discharging was carried out at a constant current at a current density of 435 $\mu$A/cm$^2$ to dissolve Li, and discharging was terminated when reached 1.0 V. Coulombic efficiency of each evaluation cell was determined from the following formula.

$$\text{(Coulombic efficiency [\%])} = [\text{(discharge capacity)/(charge capacity)}] \times 100$$

$$= [\text{(capacity upon reaching 1.0 V [mAh/cm}^2\text{])}/4.35 \text{ [mAh/cm}^2\text{]]} \times 100$$

6. Calculation of formation energy

Referring to formation energies in the Materials Project database, the formation energy ($E_{MX}$ [eV/atom]) of MgX and the formation energy ($E_{LiX}$ [eV/atom]) of LiX were obtained, and the difference ($\Delta E = E_{MX} - E_{LiX}$) therebetween was determined.

7. Measurement of deposition overvoltage (nucleation overvoltage)

For each evaluation cell, the nucleation overvoltage was measured by reading the maximum voltage when Li was deposited up to a capacity of 1 mAh. The nucleation overvoltage in the first charge/discharge cycle and the nucleation overvoltage in the second cycle were each determined.

8. Observation of cell cross-section before and after charging and discharging

    (1) A fracture surface of the evaluation cell before charging was obtained.
    (2) A fracture surface after charging at a constant current at 490 $\mu$A/cm$^2$ for 5 h to deposit Li was obtained.
    (3) The fracture surface of each of the above (1) and (2) was subjected to cross-sectional observation by SEM-EDX.

9. Evaluation results

9.1 Regarding coulombic efficiency and formation energy

Table 1 below and FIG. 6 show the coulombic efficiency [%] of each evaluation cell. Table 1 below also shows the formation energy ($E_{MX}$ [eV/atom]) of MgX, the formation energy ($E_{LiX}$ [eV/atom]) of LiX, and the difference ($\Delta E = E_{MX} - E_{LiX}$) therebetween.

TABLE 1

| | Mg or MgX | Coulombic efficiency | $E_{MX}$ | Prospective LiX | $E_{LiX}$ | $\Delta E$ |
|---|---|---|---|---|---|---|
| Comparative Example 1 | none | 97.7 | - | - | - | - |
| Comparative Example 2 | Mg | 99.3 | - | - | - | - |
| Comparative Example 3 | $MgF_2$ | 98.6 | -3.831 | LiF | -3.166 | -0.665 |
| Example 1 | $MgB_2$ | 99.4 | -0.131 | LiB | -0.172 | 0.041 |
| Example 2 | $Mg_3P_2$ | 99.6 | -0.669 | $Li_3P$ | -0.696 | 0.027 |
| Example 3 | $MgH_2$ | 99.8 | -0.296 | LiH | -0.496 | 0.200 |

As shown in Table 1 and FIG. 6, Examples 1 to 3, in which $\Delta E$ is a positive value, have an improved coulombic efficiency over Comparative Examples 1 and 2, which do not comprise MgX, and Comparative Example 3, in which $\Delta E$ is a negative value. It is considered that when $\Delta E$ is a positive value, a conversion reaction of MgX occurs during charging of an evaluation cell and LiX and fresh Mg are generated. In Examples 1 to 3, metallic lithium (Li-Mg alloy) was uniformly deposited between the solid electrolyte layer and the negative electrode current collector and formation of voids were suppressed due to the fresh Mg. In addition, since the metallic lithium was uniformly deposited in the vicinity of the surface of the solid electrolyte layer, the interface between the solid electrolyte layer and the metallic lithium remained in a satisfactory state. Further, presumably because of LiX from the conversion reaction, lithium ion-conducting property was ensured. As a result, coulombic efficiency was improved.

In Comparative Example 1 not comprising Mg or MgX, presumably since metallic lithium was unevenly deposited between the solid electrolyte layer and the negative electrode current collector, coulombic efficiency deteriorates significantly. In Comparative Example 2 comprising Mg, presumably since Mg was present between the solid electrolyte layer and the negative electrode current collector, the Li-Mg alloy as the metallic lithium could be uniformly deposited between the solid electrolyte layer and the negative electrode current collector during charging, and coulombic efficiency was thereby improved. Further, in Comparative Example 3, in which $\Delta E$ is a negative value, coulombic efficiency was higher than in Comparative Example 1 not comprising Mg or MgX but lower than in Comparative Example 2 comprising Mg. Presumably, in Comparative Example 3, the conversion reaction of MgX did not proceed and MgX, which is disadvantageous to cell reactions, was present even after charging.

9.2 Regarding nucleation overvoltage (deposition overvoltage)

The results of nucleation overvoltage (deposition overvoltage) of the evaluation cells are shown in the following Table 2.

TABLE 2

| | Mg or MgX | Deposition overvoltage [mV] | |
|---|---|---|---|
| | | Cycle 1 | Cycle 2 |
| Comparative Example 1 | none | 49.4 | 58.4 |
| Comparative Example 2 | Mg | 22.7 | 8.2 |
| Comparative Example 3 | $MgF_2$ | 53.2 | 51.3 |
| Example 1 | $MgB_2$ | 32.1 | 25.9 |
| Example 2 | $Mg_3P_2$ | 34.5 | 8.2 |
| Example 3 | MgH2 | 121.0 | 8.2 |

As shown in Table 2, Comparative Example 2 has lower deposition overvoltages than Comparative Example 1. A low deposition overvoltage means that the energy barrier for depositing metallic lithium is small and the smaller the deposition overvoltage, the more easily metallic lithium is uniformly deposited, and in turn the more easily coulombic efficiency is increased. From Comparative Example 2, it was found that deposition overvoltage can be kept low by an alloying reaction between Mg and Li. Particularly, the deposition overvoltage tends to further decrease after a second cycle when cell reactions are stabilized. In the same manner as in Comparative Example 2, the deposition overvoltages in Examples 1 to 3 decreased remarkably after the second cycle. In Examples 1 to 3, presumably, the conversion of MgX proceeded in the first cycle, fresh elemental Mg was generated, and metallic lithium was uniformly deposited on the elemental Mg as a starting point from the second cycle onward. Similar to the results of formation energy difference $\Delta E$ shown in Table 1, from the results of Table 2, it can be said that conversion reaction proceeded in Examples 1 to 3. As shown in Table 2, in Comparative Example 3, the deposition overvoltage decreased slightly from the second cycle onward, but the deposition overvoltage remained high. The formation energy difference $\Delta E$ is also small, as shown in Table 1. Thus, it is considered that the conversion reaction did not proceed in Comparative Example 3.

9.3 SEM/EDX before and after Li deposition

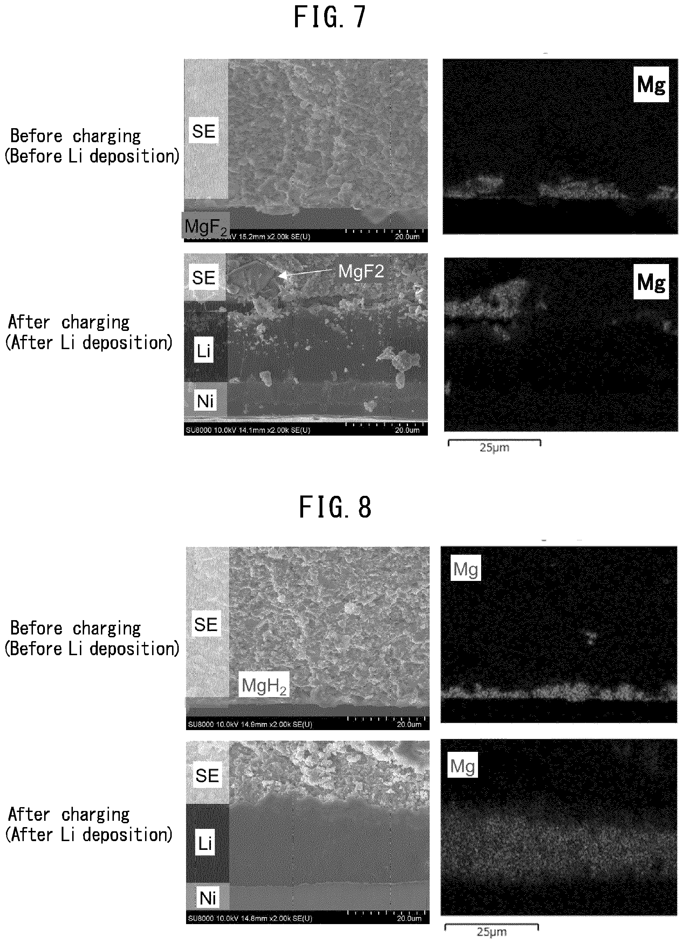

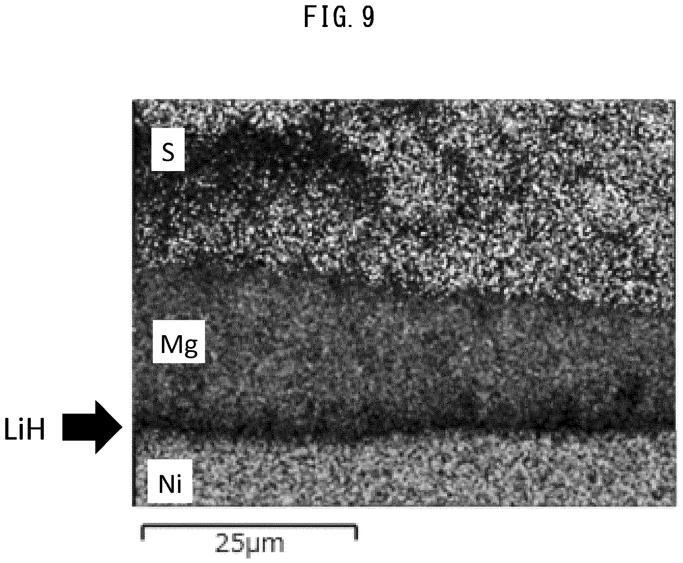

Cell cross-sections before and after Li deposition for each of the evaluation cells according to Comparative Example 3 and Example 3 were observed by SEM/EDX and evaluated. FIG. 7 shows the results of Comparative Example 3, and FIGS. 8 and 9 show the results of Example 3.

As shown in FIG. 7, there was no substantial change in Mg distribution in the cell cross-section before and after charging in Comparative Example 3. In addition, no diffusion of Mg in the deposited metallic lithium deposited after charging was confirmed. Specifically, it was found that in Comparative Example 3, the conversion reaction of $MgF_2$ did not proceed during charging.

As shown in FIG. 8, there was a significant change in Mg distribution in the cell cross-section before and after charging in Example 3. Specifically, it was found that Mg diffused into the metallic lithium deposited after charging. Specifically, it was found that in Example 3, the conversion reaction of $MgH_2$ proceeded during charging, fresh Mg was generated, which acted as a starting point for deposition of metallic lithium, and a Li-Mg alloy was deposited.

As shown in FIG. 9, in Example 3, there is a region between the S-containing region (corresponding to a solid electrolyte layer) and the Ni-containing region (corresponding to a negative electrode current collector) in which none of Ni, Mg, and S are present, and presumably LiH generated by a conversion reaction exists there. In Examples 1 and 2, presumably, a conversion reaction occurred during charging and a Li-Mg alloy was deposited on fresh Mg as a starting point, in the same manner as in Example 3. From FIG. 9, it can be seen that LiH is a thin film, and the thickness thereof is 10 nm or more and 50 $\mu$m or less.

10. Further examination

10.1 Formation energy difference between LiX and MX and formation energy difference between LiM and MX

The formation energy ($E_{LiM}$) of an alloy of Li and Mg (Li-Mg) is -0.061 [eV/atom]. Comparing the $E_{LiM}$, $E_{LiX}$ shown in the above Table 1, and $E_{MX}$ shown in the above Table 1, it was found that the metal element M (Mg) and the element X adopted in Examples 1 to 3 satisfy the following relations (1) and (2).

(1) The formation energy $E_{MX}$ of a compound of the metal element M and the element X is lower than the formation energy $E_{LiM}$ of a compound of Li and the metal element M.
(2) The formation energy $E_{LiX}$ of a compound of Li and the element X is lower that the formation energy $E_{MX}$ of a compound of the metal element M and the element X.

10.2 CV measurement

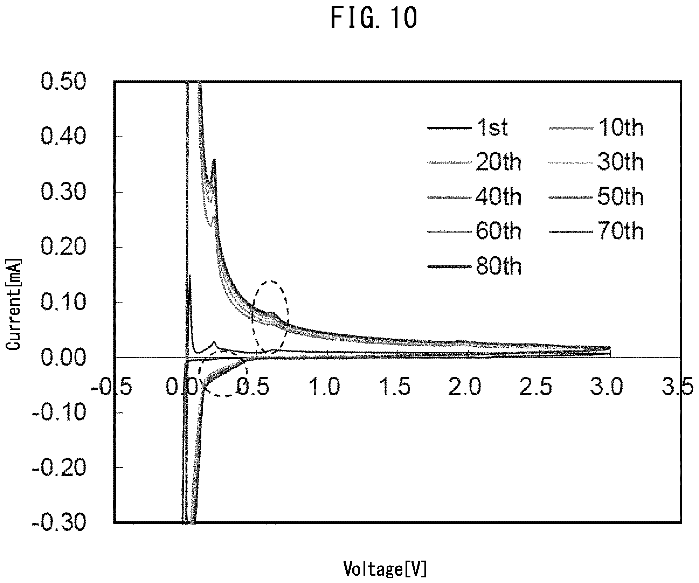

The above evaluation cell according to Example 3 was subjected to CV measurement under the following conditions. The results are shown in FIG. 10.
Measurement conditions: 1 mV/s, -0.04 V to 3 V, 60 °C
As shown in FIG. 10, a redox peak from the conversion reaction of $MgH_2$ was confirmed in the vicinity of 0.5 V. The evaluation cell operating reversibly even after 80 cycles was also confirmed.

10.3 XRD measurement

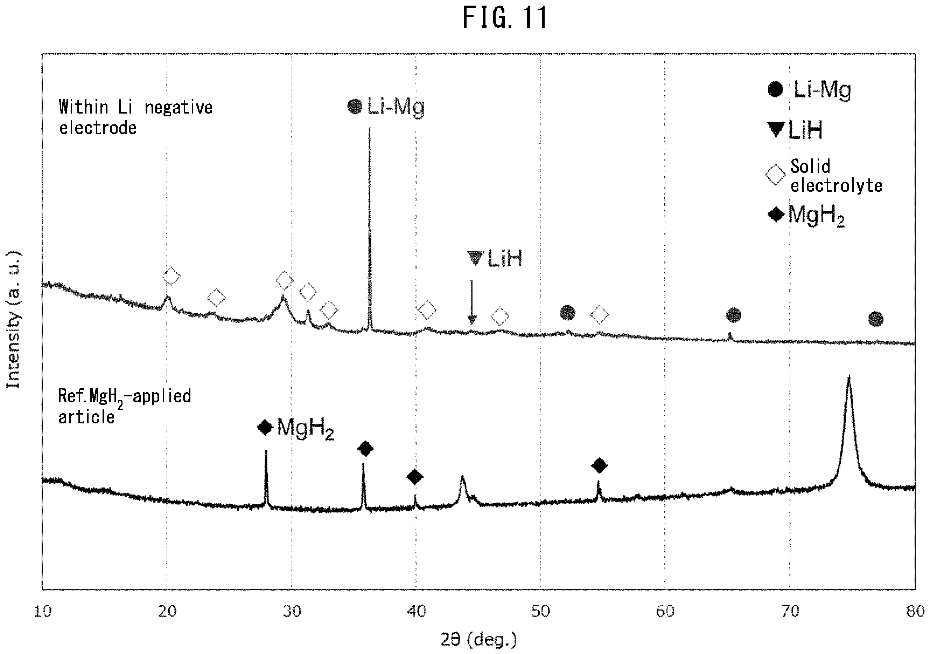

The above evaluation cell according to Example 3 was charged (Li deposition) at a constant current at 490 $\mu$A/cm$^2$ for 6 h, the cell was then disassembled, and XRD measurement was carried out targeting the interface between the solid electrolyte layer and the deposited Li. The XRD measurement conditions are as described below. The results are shown in FIG. 11.

> Scanning speed: 5°/min
> Scanning range: 5 to 90°
> Step size: 0.02°

As shown in FIG. 11, it was found that in the evaluation cell after charging, $MgH_2$ was substantially absent while the solid electrolyte, Li-Mg, and LiH coexisted at the interface between the solid electrolyte layer and the deposited Li.

10.4 When MgX position is changed (Example 4)

A Li metal layer, a $MgH_2$-transferred solid electrolyte layer, and an uncoated current collector were laminated to obtain an evaluation cell having the configuration shown in FIG. 5. Specifically, 101.7 mg of a sulfide solid electrolyte ($Li_2S$-$P_2S_5$-based material comprising LiBr and LiI) was prepared and compression-molded at a pressure of 1 ton/cm$^2$ to obtain a solid electrolyte layer. A layer composed of $MgH_2$ was then laminated on the surface of the solid electrolyte layer and compression-molded at a pressure of 2 ton/cm$^2$ to transfer the layer composed of $MgH_2$ to the surface of the solid electrolyte layer. Subsequently, a negative electrode current collector was set under the $MgH_2$ layer and compression-molded at a pressure of 6 ton/cm$^2$ to obtain a laminated body of a solid electrolyte layer, a $MgH_2$ layer, and a negative electrode current collector. A Li foil was further set above the solid electrolyte layer of the laminated body and compression-molded, followed by restraining at 2 N•m to obtain an evaluation cell according to Example 4.

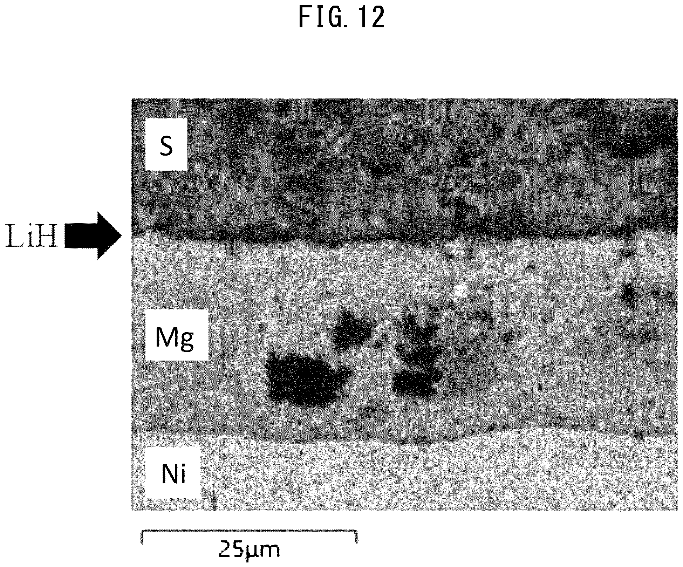

The obtained evaluation cell was charged at a constant current at 490 µA/cm$^2$ for 5 h to deposit Li, a fracture surface was obtained, and thereafter a cross-sectional observation by SEM-EDX was carried out. The results are shown in FIG. 12. As shown in FIG. 12, the presence of LiH at the interface between the solid electrolyte layer and the Li-Mg layer was verified. When the coulombic efficiency of the evaluation cell was measured in the same manner as above, the same level of coulombic efficiency as in Example 3 was obtained. From this result, it is considered that the position of LiX (LiH) in the negative electrode active material layer is not particularly restricted.

10.5 Regarding MgX type

Although H, B, and P were exemplified above as the element X, the element X is not limited thereto. Referring to formation energies in the Materials Project database, elements other than H, B, and P applicable as the element X were extracted. Examples of positive values of $\Delta E$ described above are shown in Table 3 below. $\Delta E$ of the elements H, B, and P are also listed for reference. When an element exemplified below is adopted as the element X, the same effect as in Examples 1 to 3 is presumably exhibited.

TABLE 3

| Element X | $\Delta E$ |
|---|---|
| Bi | 0.327 |
| Sb | 0.273 |
| In | 0.218 |
| Sn | 0.216 |
| H | 0.200 |
| I | 0.201 |
| Ga | 0.179 |
| Te | 0.160 |
| Hg | 0.153 |
| Cd | 0.150 |
| Si | 0.116 |
| B | 0.041 |
| As | 0.085 |
| Zn | 0.081 |

(continued)

| Element X | $\Delta E$ |
|---|---|
| Ge | 0.073 |
| Br | 0.060 |
| P | 0.027 |
| Se | 0.011 |

## 11. Supplemental and conclusion

In the above Examples, specific compounds of the metal element M and the element X were exemplified, but as long as an MX can cause the above conversion reaction, the same effect is presumably exhibited. Specifically, the metal element M is not limited to Mg. However, it is considered that when the metal element M is Mg, deposition of metallic lithium during charging is more likely to be uniform. The element X is also not limited to those exemplified above. However, it is considered that when the element X is at least one of H, B, and P, LiX after the conversion reaction has high lithium ion-conducting property. Further, as described above, when the metal element is Mg and the element X is at least one of Bi, Sb, In, Sn, H, I, Ga, Te, Hg, Cd, Si, B, As, Zn, Ge, Br, P, and Se, an excellent effect is presumably exhibited.

In the above Examples, evaluation cells as shown in FIG. 5 were produced in order to easily evaluate deposition behavior and coulombic efficiency of metallic lithium. However, when configuring actual secondary batteries, a suitable component may be adopted as the positive electrode in place of the Li foil.

In the above Examples, the case in which a specific sulfide solid electrolyte was adopted in the solid electrolyte layer was exemplified, but the solid electrolyte contained in the solid electrolyte layer is not limited thereto. However, when a sulfide solid electrolyte is contained in the solid electrolyte layer, higher performance as a secondary battery is easily obtained.

In the above Examples, the case in which a Ni foil was adopted as the negative electrode current collector was exemplified, but the configuration of the negative electrode current collector is not limited thereto. However, when a negative electrode current collector comprising at least one of Ni and stainless steel is used, an alloying reaction between the negative electrode current collector and lithium presumably can be suppressed.

As described above, a secondary battery having the following configuration comprises a deposition-type metallic lithium negative electrode and has excellent coulombic efficiency. Specifically, the secondary battery of the present disclosure has the following configuration (A) or (B).

(A) The secondary battery comprises a positive electrode active material layer, a solid electrolyte layer, and a negative electrode active material layer, wherein

the negative electrode active material layer comprises a first substance and a second substance, wherein the first substance is at least one of an alloy of Li and an element X and a compound of Li and the element X; the second substance is at least one of a simple substance of a metal element M, an alloy of Li and the metal element M, and a compound of Li and the metal element M; and a formation energy $E_{LiX}$ of the first substance is lower than a formation energy $E_{MX}$ of a compound of the metal element M and the element X.

(B) The secondary battery comprises a positive electrode active material layer, a solid electrolyte layer, a negative electrode current collector, and metallic lithium deposited between the solid electrolyte layer and the negative electrode current collector by charging, wherein

a compound of a metal element M and an element X is present between the solid electrolyte layer and the negative electrode current collector; and a formation energy $E_{MX}$ of a compound of the metal element M and the element X is higher than a formation energy $E_{LiX}$ of a compound of Li and the element X.

REFERENCE SIGNS LIST

10    positive electrode active material layer
20    solid electrolyte layer

| 30 | negative electrode active material layer |
| 31 | first substance |
| 32 | second substance |
| 33 | compound of metal element M and element X |
| 40 | positive electrode current collector |
| 50 | negative electrode current collector |
| 60 | covered product |
| 70 | laminated body |
| 101, 102 | secondary battery |

**Claims**

1. A secondary battery, comprising a positive electrode active material layer, a solid electrolyte layer, and a negative electrode active material layer, wherein
   the negative electrode active material layer comprises a first substance and a second substance, wherein

   the first substance is at least one of an alloy of Li and an element X and a compound of Li and the element X;
   the second substance is at least one of a simple substance of a metal element M, an alloy of Li and the metal element M, and a compound of Li and the metal element M; and
   a formation energy $E_{LiX}$ of the first substance is lower than a formation energy $E_{MX}$ of a compound of the metal element M and the element X.

2. The secondary battery according to claim 1, wherein
   the negative electrode active material layer comprises the first substance formed into a film, wherein
   the first substance formed into the film has a thickness of 10 nm or more and 50 $\mu$m or less.

3. A secondary battery, comprising a positive electrode active material layer, a solid electrolyte layer, a negative electrode current collector, and metallic lithium deposited between the solid electrolyte layer and the negative electrode current collector by charging, wherein

   a compound of a metal element M and an element X is present between the solid electrolyte layer and the negative electrode current collector; and
   a formation energy $E_{MX}$ of the compound of the metal element M and the element X is higher than a formation energy $E_{LiX}$ of a compound of Li and the element X.

4. The secondary battery according to claim 3,
   which is configured so that the compound of the metal element M and the element X decomposes during charging to generate a compound of Li and the element X on a surface of the negative electrode current collector.

5. The secondary battery according to any one of claims 1 to 4, wherein
   the metal element M and the element X satisfy the following relations (1) and (2):

   (1) a formation energy $E_{MX}$ of a compound of the metal element M and the element X is lower than a formation energy $E_{LiM}$ of a compound of Li and the metal element M; and
   (2) a formation energy $E_{LiX}$ of a compound of Li and the element X is lower than a formation energy $E_{MX}$ of the compound of the metal element M and the element X.

6. The secondary battery according to any one of claims 1 to 5, wherein
   the metal element M is Mg.

7. The secondary battery according to claim 6, wherein
   the element X is at least one of Bi, Sb, In, Sn, H, I, Ga, Te, Hg, Cd, Si, B, As, Zn, Ge, Br, P, and Se.

8. The secondary battery according to any one of claims 1 to 7, wherein
   the element X is at least one of H, B, and P.

9. The secondary battery according to any one of claims 1 to 8, wherein

a difference between the formation energy $E_{MX}$ and the formation energy $E_{LiX}$ is 0.027 eV/atom or more.

10. A manufacturing method for a secondary battery, the method comprising:

obtaining a laminated body comprising a positive electrode active material layer, a solid electrolyte layer, a negative electrode current collector, and a compound of a metal element M and an element X disposed between the solid electrolyte layer and the negative electrode current collector; and
charging the laminated body to supply lithium ions between the solid electrolyte layer and the negative electrode current collector to cause a conversion reaction of the compound of the metal element M and the element X to generate a first substance and a second substance, wherein

the first substance is at least one of an alloy of Li and the element X and a compound of Li and the element X; and
the second substance is at least one of a simple substance of a metal element M, an alloy of Li and the metal element M, and a compound of Li and the metal element M.

FIG. 1

101

| 40 |
| 10 |
| 20 |
| 32 |
| 31 |
| 50 |

30 { 32, 31 }

FIG. 2

102

| 40 |
| 10 |
| 20 |
| 33 |
| 50 |

# FIG. 3

101

40
10
20
32 } 30
31 }
50

Charging ⬆ ⬇ Discharging

101

40
10
20
32 — 31 } 30
50

Charging ⬆ ⬇ Discharging

102

40
10
20
33
50

# FIG. 4

# FIG. 5

| Li |
| :---: |
| Solid electrolyte layer |
| MgX |
| Negative electrode current collector |

# FIG. 6

# FIG. 7

Before charging
(Before Li deposition)

After charging
(After Li deposition)

# FIG. 8

Before charging
(Before Li deposition)

After charging
(After Li deposition)

# FIG. 9

S

Mg

LiH ➡

Ni

25μm

FIG. 10

## FIG. 11

EP 4 358 169 A2

FIG. 12

LiH ➡

S

Mg

Ni

25μm

**EP 4 358 169 A2**

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2020184513 A
- JP 2012038697 A
- WO 2013131241 A
- JP 2018129159 A